## Europäisches Patentamt

(19) **European Patent Office**

**Office européen des brevets**

(11) Veröffentlichungsnummer: **0 114 312**
**B1**

(12) **EUROPÄISCHE PATENTSCHRIFT**

(45) Veröffentlichungstag der Patentschrift:
**13.05.87**

(51) Int. Cl.⁴: **B 32 B 27/32**

(21) Anmeldenummer: **83112673.5**

(22) Anmeldetag: **16.12.83**

(54) **Siegelbare transparente polyolefinische Mehrschichtfolie.**

(30) Priorität: **24.12.82  DE 3247998**

(43) Veröffentlichungstag der Anmeldung:
**01.08.84 Patentblatt 84/31**

(45) Bekanntmachung des Hinweises auf die Patenterteilung:
**13.05.87 Patentblatt 87/20**

(84) Benannte Vertragsstaaten:
**BE DE FR GB IT**

(56) Entgegenhaltungen:
**DE - A - 2 912 179**
**DE - A - 2 941 140**
**GB - A - 2 076 741**
**US - A - 4 230 767**

(73) Patentinhaber: **HOECHST AKTIENGESELLSCHAFT,**
**Postfach 80 03 20, D-6230 Frankfurt am Main 80 (DE)**

(72) Erfinder: **Crass, Günther, Bachstrasse 7,**
**D-6204 Taunusstein 4 (DE)**
Erfinder: **Janocha, Siegfried, Dr., Am Hohen Stein 6,**
**D-6200 Wiesbaden (DE)**
Erfinder: **Dietz, Wolfgang, Dr., Armenruhstrasse 7a,**
**D-6200 Wiesbaden (DE)**
Erfinder: **Bothe, Lothar, Dr., Am Heiligenhaus 9,**
**D-6500 Mainz-Gonsenheim (DE)**

ACTORUM AG

## Beschreibung

Die Erfindung betrifft eine siegelbare transparente Mehrschichtfolie, bestehend aus einer Basisschicht aus einem Propylenpolymeren und mindestens einer siegelbaren Schicht, welche mindestens ein Propylencopolymeres, mindestens ein niedermolekulares Harz und mindestens ein Polydiorganosiloxan enthält.

Aus der DE-A-16 94 694 sind heisssiegelbare Schichtstoffe bekannt, die aus einer orientierten Polypropylenfolie bestehen, die mindestens eine heissiegelfähige Schicht aus einem Ethylen-Propylen-Copolymeren aus 2 bis 6 Gew.-% Ethylen und 98 bis 94 Gew.-% Propylen enthält. Diese Folien besitzen zwar eine gute Heissiegelbarkeit, jedoch sind sie nicht im erwünschten Masse klar und kratzfest und zeigen zudem ungenügende Verarbeitungseigenschaften auf schnellaufenden Verpackungsmaschinen.

Aus der EP-B-27 586 sind siegelbare Polypropylenfolien bekannt, die eine Siegelschicht aus einem Ethylen-Homo- oder Copolymerisat besitzen, die mit einem langkettigen aliphatischen Amin, einer unverträglichen thermoplastischen Komponente und einem Polydialkylsiloxan ausgerüstet sind. Diese Folien stellen zwar eine Verbesserung im Vergleich zur DE-A-16 94 694 dar, besitzen aber noch eine unzureichende Laufsicherheit auf horizontalen Form-Füll-Schliess-Maschinen.

Aus der DE-A-29 41 140 ist ein Verpackungsmaterial bekannt, welches aus einer Grundschicht aus einem Polypropylenpolymerisat und aus einer Oberflächenschicht besteht, die aus einem Gemisch eines Propylen-Ethylen-Copolymerisats und eines $C_4$–$C_{10}$-$\alpha$-Olefin-Propylen-Copolymerisats besteht. Diese Oberflächenschicht kann auch ein niedrigmolekulares thermoplastisches Harz sowie Siliconöle enthalten. Derartige Verpackungsmaterialien weisen den Nachteil auf, dass sie kratzempfindlich sind und noch unbefriedigende optische Eigenschaften besitzen.

Ferner beschreibt die Firma Mitsui Petrochemical Industries, Ltd. in ihrem Prospekt TAFMER® XR, Japan 82 03 1000 Cl ein $\alpha$-Olefin-Copolymeres, welches als Siegelschicht für Polypropylenfolien geeignet ist. Wie Vergleichsbeispiel 3 zeigt, sind aber Polypropylenfolien mit Siegelschichten in mancherlei Hinsicht noch nicht befriedigend.

Keine der bekannten Mehrschichtfolien erfüllt gleichzeitig die für eine Verpackungsfolie wichtigen Eigenschaften grosser Siegelbereich, niedrige Siegeltemperatur, hoher Glanz, geringe Trübung, geringe Kratzempfindlichkeit und gute Laufsicherheit auf schnellaufenden Verpackungsmaschinen unterschiedlichen Typs.

Die vorliegende Erfindung hat sich deshalb die Aufgabe gestellt, eine siegelbare transparente polyolefinische Mehrschichtfolie zu schaffen, die einen grossen Siegelbereich, niedrige Siegelanspringtemperatur, geringe Kratzempfindlichkeit, hohen Glanz, niedrige Trübung und geringe Reibung besitzen soll, die auf einer konventionellen Biaxialstreckanlage mit Walzenstreckung hergestellt werden kann und sich besonders als Verpackungsfolie mit guter Verarbeitbarkeit auf schnellaufenden Verpackungsmaschinen unterschiedlichen Typs auszeichnen soll.

Dieses Ziel wurde erfindungsgemäss dadurch erreicht, dass bei einer siegelbaren transparenten polyolefinischen Mehrschichtfolie der eingangs genannten Art die Siegelschicht aus einer Kombination von

a) 68,5 bis 89,7 Gew.-%, bezogen auf die siegelbare Schicht, einer Olefinharzzusammensetzung, bestehend aus einem Ethylen-Propylen-Butylen-Terpolymeren und einem Propylen-Butylen-Copolymeren entsprechend einem Gehalt von 0,1 bis 7 Gew.-% Ethylen, 53 bis 89,9 Gew.-% Propen und 10 bis 40 Gew.-% Butylen, bezogen auf die Olefinharzzusammensetzung,

b) 5 bis 15 Gew.-%, bezogen auf die siegelbare Schicht eines niedrigmolekularen, mit der Olefinharzzusammensetzung verträglichen Harzes,

c) 5 bis 15 Gew.-%, bezogen auf die siegelbare Schicht, eines Propylenhomopolymeren und

d) 0,3 bis 1,5 Gew.-%, bezogen auf die siegelbare Schicht, eines Polydiorganosiloxans besteht.

Vorteilhaft ist in der siegelbaren Schicht als niedrigmolekulares Harz ein Harz aus der Gruppe der Kohlenwasserstoffharze, Ketonharze, Polyamidharze, Kolophoniumharze, Dammarharze, der chlorierten aliphatischen und aromatischen Harze enthalten. Vorzugsweise ist als Komponente d) der siegelbaren Schicht ein Polydiorganosiloxan einer kinematischen Viskosität von mindestens 100 $mm^2$/s bei 25 °C enthalten. Bevorzugt besitzt die biaxial gereckte Mehrschichtfolie eine Dicke von 10 bis 50 μm, besonders bevorzugt von 15 bis 35 μm.

Verwendung findet die erfindungsgemässe Mehrschichtfolie vor allem als Verpackungsfolie auf schnellaufenden Einschlagmaschinen.

Die Basisschicht der siegelbaren polyolefinischen Mehrschichtfolie besteht aus einem Propylenpolymeren, das zum überwiegenden Teil aus Propylen besteht und einen Schmelzpunkt von 140 °C oder höher, vorzugsweise einen Schmelzpunkt von 150 °C oder höher, besitzt.

Isotaktisches Polypropylen mit einem n-heptanlöslichen Anteil von 15 Gew.-% und weniger, Copolymere von Ethylen und Propylen mit einem Ethylengehalt von 10 Gew.-% oder weniger, Copolymere von Polypropylen mit $C_4$–$C_8$-$\alpha$-Olefinen mit einem $C_4$–$C_8$-$\alpha$-Olefingehalt von 10 Gew.-% oder weniger stellen spezielle Beispiele für das Polypropylenpolymere der Basisschicht dar.

Das Propylenpolymere der Basisschicht hat zweckmässig einen Schmelzflussindex von 0,5 g/10 min bis 8 g/10 min bei 230 °C und 2,16 kp Belastung (DIN 53 735), insbesondere von 1,5 g/10 min bis 4 g/10 min.

Die Basisschicht aus dem Propylenpolymeren kann zusätzlich übliche Zusatzmittel, wie z.B. Antistatika, Gleitmittel und Stabilisatoren, enthalten.

Die erfindungsgemässe Mehrschichtfolie ist transparent, d.h. sie enthält weder in der Polypropylen-Basisschicht noch in der bzw. den Siegelschicht(en) trüb machende Bestandteile.

Die in den erfindungsgemässen Mehrschichtenfolien enthaltene Olefinharzzusammensetzung der siegelbaren Schicht hat einen bei 20 °C p-xylollöslichen Anteil von 25 bis 70 Gew.-%, bevorzugt von 40 bis 60 Gew.-%. Der Schmelzpunkt der Olefinharzzusammensetzung liegt bei 130 °C oder höher. Die Olefinharzzusammensetzung hat einen Schmelzflussindex von 0,1 bis 16 g/10 min bei 230 °C und 2,16 kp Belastung (DIN 53 735), insbesondere von 4 bis 10 g/10 min bei 230 °C und 2,16 kp Belastung.

Als besonders geeignet hat sich das Copolymere aus α-Olefinen erwiesen, welches die Firma Mitsui Petrochemical Industries, Ltd. unter dem Namen TAFMER XR-106 L verkauft.

Bei dem erfindungsgemäss eingesetzten niedrigmolekularen, mit der Olefinharzzusammensetzung verträglichen Harz handelt es sich um ein natürliches oder synthetisches Harz. Das Harz hat einen Erweichungspunkt von 60 bis 180 °C (bestimmt nach DIN 1995–U4), bevorzugt von 80 bis 130 °C.

Unter verträglichen Harzen sind solche Harze zu verstehen, die, wenn sie als solche in einer Konzentration von bis zu 15 Gew.-% der Olefinharzzusammensetzung der Siegelschicht zugemischt werden, keine Verschlechterung der Trübung der Folie bewirken.

Als Beispiel für geeignete niedrigmolekulare, mit der Olefinharzzusammensetzung verträgliche thermoplastische Harze sind zu nennen Kohlenwasserstoffharze, Ketonharze, Polyamidharze, Kolophonium, Dammarharze, chlorierte aliphatische und aromatische Kohlenwasserstoffharze. Diese Harze werden in Ullmann, Encyclopädie der technischen Chemie, Band 12, 1976, Seiten 525 bis 555, beschrieben.

Unter «Kohlenwasserstoffharzen» sind Polymerisate, die vornehmlich aus Kohlenstoff und Wasserstoff bestehen, zu verstehen, deren Bestandteile beispielsweise aus Koksofengas, Kohlenteerdestillaten, bei Crackprozessen von Naphtha bzw. Gasöl und aus Terpentinöl gewonnen werden können. Als wesentliche Vertreter der Kohlenwasserstoffharze sind die Petroleumharze, die Harze aus Steinkohlenteer sowie die Terpentinharze zu nennen. Typische Beispiele der Kohlenwasserstoffharze stellen Cumaronharze, Erdölharze und Terpenharze dar. Diese Harze werden in obengenanntem Buch auf den Seiten 539 bis 546 beschrieben.

Cumaronharze werden meist durch Polymerisation von entphenolten und entbasten Fraktionen des Steinkohlenteerleichtöls, die beispielsweise Inden, Styrol, Dicyclopentadien und Cumaron und deren Homologe als ungesättigte Inhaltsstoffe enthalten, gewonnen. Durch Copolymerisation mit Phenol und Kombination mit anderen Kunststoffen ist eine vielseitige Modifikation möglich. Diese Harze werden in obengenanntem Buch auf den Seiten 545 bis 546 beschrieben.

Die Rohstoffbasis der Erdölharze wird bei der Crackung von Naphtha oder Gasöl auf Rohstoffe der chemischen Industrie, wie Ethylen, Propylen, gewonnen. Es handelt sich beispielsweise um harzbildende Verbindungen, wie Buten, Butadien, Penten, Piperylen, Isopren, Cyclopentadien, Dicyclopentadien, Alkylbenzole, Methyldicyclopentadien, Methylinden, Naphthalin, Styrol, Inden, Vinyltoluol, Methylstyrol. Diese Harze werden in obengenanntem Buch auf den Seiten 541 bis 542 beschrieben.

Bei Terpenharzen handelt es sich um Polymerisate von Terpenen. Als Beispiele für geeignete Terpene sind β-Pinen, Dipenten, Limonen, Myrcen, Bornylen, Camphen und ähnliche Terpene zu nennen. Diese Harze sind in obengenanntem Buch auf den Seiten 542 bis 543 beschrieben.

Hervorzuheben ist, dass die Kohlenwasserstoffe durch Reaktion der Rohstoffe vor der Polymerisation, durch Einführung spezieller Monomerer oder durch Reaktion des polymerisierten Produktes modifiziert werden können. Besonders hervorzuheben ist hierbei die Hydrierung oder Teilhydrierung ungesättigter Bestandteile der Harze. Möglichkeiten der Modifizierung von Kohlenwasserstoffharzen sind in obengenanntem Buch auf den Seiten 543 bis 544 beschrieben.

Bei Kolophonium handelt es sich um natürliche Harze, die durch Abdestillieren von Terpentinöl aus einem durch Lebendharzung von verschiedenen Kiefernarten gewonnenen Terpentinbalsam (Balsamharze), durch Lösungsmittelextraktion alter Wurzelstöcke gewonnener Harze (Wurzelharze) und durch fraktionierte Destillation von Tallöl gewonnener Harze (Tallharze) erhalten werden. Ausserdem sollen darunter Kolophoniumester sowie modifiziertes Kolophonium (z.B. hydriertes, dehydriertes, fraktioniertes, isomerisiertes und disproportioniertes Kolophonium) und ähnliche Substanzen verstanden werden. Kolophonium wird in obengenanntem Buch auf den Seiten 529 bis 536 beschrieben.

Kondensatharze entstehen durch Säure-katalysierte Kondensation von Erdölfraktionen mit Aldehyden. Typische Vertreter sind Xylol-Formaldehyd-Harze und Naphthalin-Formaldehyd-Harze. Kondensationsharze werden in obengenanntem Buch auf Seite 542 beschrieben.

Dammarharze werden durch Lebendharzung von Bäumen der Familie Dipterocarpaicae gewonnen. Diese Harze sind im obengenannten Buch auf Seite 527 beschrieben.

Die Untergrenze von 5 Gew.-%, bezogen auf die siegelbare Schicht, des niedermolekularen, mit der Olefinharzzusammensetzung verträglichen Harzes sollte nicht unterschritten werden, da erst bei höheren Anteilen die Auswirkung des Harzzusatzes auf die optischen Eigenschaften und die Kratzempfindlichkeit in Erscheinung tritt.

Mehr als 15 Gew.-%, bezogen auf die siegelbare Schicht, an niedermolekularem, mit der Olefinharzzusammensetzung verträglichem Harz haben sich aus verfahrenstechnischen Gründen als unzweckmässig erwiesen.

Das als Komponente c) der Siegelschicht eingesetzte Polypropylenhomopolymer sollte eine Schmelztemperatur, die oberhalb der Schmelztemperatur der Komponente a) liegt, besitzen. Bei Zusätzen von weniger als 5 Gew.-% an Polypropylenhomopolymeren ergeben sich nur geringfügige Verbesserungen der optischen Eigenschaften sowie der Kratzfestigkeit und noch nicht ausreichende Verbesserungen der Maschinengängigkeit an schnellaufenden Verpackungsmaschinen. Zusätze von mehr als 15 Gew.-% würden zwar die optischen Eigenschaften, die Kratzfestigkeit und die Maschinengängigkeit weiter verbessern, jedoch tritt dann eine merkliche Verschlechterung der Siegeleigenschaften ein.

Erfindungsgemäss können Polydiorganosiloxane oder deren Mischungen eingesetzt werden, die bei 25 °C eine Viskosität von mindestens 100 mm²/s aufweisen. Als Beispiele für geeignete Polydiorganosiloxane sind Polydialkylsiloxane, Polyalkylphenylsiloxane, olefinmodifizierte Siloxanöle, polyethermodifizierte Siliconöle, olefin/polyethermodifizierte Siliconöle, epoxymodifizierte Siliconöle und alkoholmodifizierte Siliconöle, Polydialkylsiloxane mit vorzugsweise $C_1$ bis $C_4$ in der Alkylgruppe, insbesondere Polydimethylsiloxane, hervorzuheben.

Weniger als 0,3 Gew.-%, bezogen auf die siegelbare Schicht, an Polydiorganosiloxan sollten als Komponente d) nicht enthalten sein, da dies bei der beschriebenen Rohstoffkombination noch zu erhöhten Aussortierungen an den schnellaufenden Verpackungsmaschinen führt, während grössere Mengen als 1,5 Gew.-%, bezogen auf die siegelbare Schicht, an Polydiorganosiloxan zu verfahrenstechnischen Schwierigkeiten bei der Folienherstellung und zu Fehleinschlägen in den Verpackungsmaschinen infolge zu geringer Reibung führen.

Eine Ausrüstung der siegelbaren Schicht mit üblichen Additiven, wie z.B. Gleitmittel, Antistatika und Stabilisatoren, ist möglich.

Die Dicke der Siegelschicht(en) sollte weniger als 3 μm, insbesondere weniger als 1 μm betragen, da sich bei grösseren Schichtdicken das Verarbeitungsverhalten auf schnellaufenden Verpackungsmaschinen wieder verschlechtert.

Die Lösung der gestellten Aufgabe wird erreicht durch den Einsatz der erfindungsgemässen Siegelschicht aus einer Kombination von vier Komponenten entsprechend Anspruch 1.

Der grosse Siegelbereich und die niedrige Siegelanspringtemperatur werden durch die Olefinharzzusammensetzung erreicht. Die geringe Kratzempfindlichkeit ebenso wie die gute Optik (Glanz, Trübung) werden durch die synergistisch wirkende Kombination von Propylenhomopolymer und niedrigmolekularem Harz erreicht, wobei erstaunlicherweise die Siegelung nicht verschlechtert wird, obwohl das reine Propylenhomopolymer nicht siegelbar ist. Die gute Verarbeitbarkeit ist auf das zugesetzte Polydiorganosiloxan in Verbindung mit dem im Vergleich zur Olefinharzzusammensetzung härteren Propylenhomopolymeren zurückzuführen. Weiterhin wird das Verkleben an den Walzen im Längsstreckbereich durch die Kombination der vier Komponenten vermieden.

Die Grenzen von 68,5 bis 89,7%, bezogen auf die siegelbare Schicht, an Olefinharzzusammensetzung a) finden ihre Begründung in dem Ansteigen der minimalen Siegeltemperatur und dem Abfall der Siegelfestigkeit bei geringeren Anteilen an Olefinharzzusammensetzung und dem Rückgang der positiven Effekte der erfindungsgemässen Zusätze bei höheren Anteilen an Olefinharzzusammensetzung.

Sofern nicht ausdrücklich angegeben, wurden die einzelnen Daten nach folgenden Methoden ermittelt:

Schmelzflussindex – DIN 53 735 bei 230 °C und 2,16 kp Belastung

Erweichungspunkt – DIN 1995-U4

Schmelzpunkt – DSC-Messung, Maximum der Schmelzkurve, Aufheizgeschwindigkeit 20 °C/min.

Trübung:

Die Trübung der Folie wird in Anlehnung an ASTM-D 1003-52 gemessen, wobei an Stelle einer 4°-Lochblende eine 1°-Spaltblende eingesetzt wird und die Trübung in Prozent für vier übereinanderliegende Folienlagen angegeben wird. Die vier Lagen wurden gewählt, da man hierdurch im optimalen Messbereich liegt.

Glanz:

Der Glanz wird mit einem Reflektometer, Typ RGN 10.01.02 nach Dr. Schwarzau, Berlin, mit einer planen, polierten schwarzen Glasplatte als Standard gemessen.

Kratzfestigkeit bzw. Kratzempfindlichkeit:

Die Kratzfestigkeit wird in Anlehnung an DIN 53 754 bestimmt.

Für die Bestimmung der Kratzfestigkeit wird das Abriebmessgerät Taber Model 503 Abraser der Fa. Teledyne Taber benutzt, wobei Reibräder der Marke Calibrade® H18, die mit 250 g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers.

Beispiele

Mit Hilfe des Koextrusionsverfahrens wurden jeweils aus einer Breitschlitzdüse von 280 mm Breite und 1,8 mm Spalthöhe bei einer Extrusionstemperatur von 260 °C und einer Fördermenge von 70 kg/h als Summe 1 mm dicke Mehrschichtfolien extrudiert, deren Basis aus Polypropylen mit einem Schmelzflussindex von 2 g/10 min und den verschiedenen beiden Aussenschichten bestanden. Diese Folien wurden nach Durchlaufen einer 20 mm langen Luftstrecke auf einer 30 °C warmen Kühlwalze des Durchmessers 600 mm abgeschreckt, die mit einer Umfangsgeschwindigkeit von 4,5 m/min lief. Danach wurden die Folien von der Kühlwalze auf ein Walzentrio von ebenfalls 30 °C und einer Umfangsgeschwindigkeit von ebenfalls 4,5 m/min übergeben und dann nach Erwärmung auf 130 °C von einem weiteren Walzentrio um den Faktor 5 längsgestreckt. Anschliessend wurden sie bei 175 °C Lufttemperatur auf das 10fache in Querrichtung verstreckt.

Die so gebildeten Mehrschichtfolien hatten eine Basisschicht aus Polypropylen der Dicke ca. 19 μm, auf jeder Seite eine Siegelschicht der Dicke 0,5 bis 0,8 μm.

In der Tabelle sind die Eigenschaften der verschiedenen hergestellten Mehrschichtenfolien zusammengestellt.

Beispiel 1

Die Siegelschichten bestanden aus

a) 79 Gew.-%, bezogen auf die Siegelschicht, einer Olefinharzzusammensetzung, die sich aus

$a_1$) 50 Gew.-% eines Ethylen-Propylen-Butylen-Terpolymeren, bestehend aus 1,4 Gew.-% Ethylen, 2,8 Gew.-% Butylen und 95,8 Gew.-% Propylen (jeweils bezogen auf das Terpolymere), sowie

$a_2$) 50 Gew.-% eines Propylen-Butylen-Copolymeren, bestehend aus 66,8 Gew.-% Propylen und 33,2 Gew.-% Butylen (bezogen jeweils auf das Copolymere), zusammensetzt (es handelt sich um TAFMER XR-106 L), was einem Gehalt von 0,7 Gew.-% Ethylen, 81,3 Gew.-% Propylen und 18 Gew.-% Butylen, bezogen auf das TAFMER XR-106 L, entspricht. Die Olefinzusammensetzung $a_1$ + $a_2$ hatte einen Schmelzflussindex von 8 g/10 min und einen Schmelzpunkt von 150 °C;

b) 10 Gew.-%, bezogen auf die Siegelschicht, von Arkon® P 125, einem hydrierten Kohlenwasserstoffharz mit einem Erweichungspunkt von 125 °C;

c) 10 Gew.-%, bezogen auf die Siegelschicht, eines Propylen-Homopolymers mit einem Schmelzpunkt von 162 °C (HOSTALEN PPN 1060 F); und

d) 1 Gew.-%, bezogen auf die Siegelschicht, an Polydimethylsiloxan einer kinematischen Viskosität von 30 000 mm²/s bei 25 °C.

Komponenten a, b, c und d waren homogen verteilt, als sie zur Herstellung der Mehrschichtfolie eingesetzt wurden.

Vergleichsbeispiel 1

Beispiel 1 wurde wiederholt, jedoch wurde als Siegelschicht statt der Kombination a, b, c, d ein statistisches Ethylen-Propylen-Copolymerisat mit 4,5 Gew.-% Ethylen ohne weitere Zusätze verwendet (Vergleich gegen DE-A-16 94 694).

Vergleichsbeispiel 2

Das Beispiel 1 wurde wiederholt, jedoch für die Siegelschichten der Rohstoff nach Beispiel 2 der EP-B-27 586, Veröffentlichungstag 22.9.82, eingesetzt.

Vergleichsbeispiel 3

Beispiel 1 wurde lediglich mit Komponente a) in der Siegelschicht wiederholt; diese Mischung aus $a_1$ + $a_2$ (TAFMER XR 106 L) entspricht einem Gehalt von 0,7 Gew.-% Ethylen, 81,3 Gew.-% Propylen und 18 Gew.-% Butylen, bezogen auf die Siegelschicht.

Vergleichsbeispiel 4

Die Siegelschicht nach Vergleichsbeispiel 3 enthielt zusätzlich noch 1 Gew.-%, bezogen auf die Siegelschicht, Polydimethylsiloxan einer kinematischen Viskosität von 30 000 mm²/s bei 25 °C.

Vergleichsbeispiel 5

Die Siegelschicht nach Vergleichsbeispiel 4 enthielt zusätzlich 10 Gew.-% eines Polypropylenhomopolymeren (Hostalen PPN 1060 F), entsprechend 89 Gew.-% Olefinharzzusammensetzung, 1 Gew.-% Polydimethylsiloxan und 10 Gew.-% Polypropylenhomopolymer.

Vergleichsbeispiel 6

Die Siegelschicht nach Vergleichsbeispiel 4 enthielt zusätzlich 10 Gew.-% eines hydrierten Kohlenwasserstoffharzes (Arkon P 125), entsprechend 89 Gew.-% Olefinharzzusammensetzung, 1 Gew.-% Polydimethylsiloxan und 10 Gew.-% Harz.

Tabelle: Folieneigenschaften

| Beispiel | Glanz (%) S1+S2 2 | Trübung (%) 4lagig | KE (%) S1+S2 2 | min. Siegelt. s1+S2 2 | Maschinengängigkeit* | | |
|---|---|---|---|---|---|---|---|
| | | | | | vFFS- | hFFS- | Einschlag- Maschine |
| Beispiel 1 | 173 | 17 | 24 | 90 | ++ | ++ | ++ |
| Vergleichsbeisp. 1 | 135 | 30 | 40 | 124 | ++ | −− | −− |
| Vergleichsbeisp. 2 | 153 | 22 | 35 | 122 | ++ | ± | ++ |
| Vergleichsbeisp. 3 | 166 | 23 | 46 | 90 | ± | −− | −− |
| Vergleichsbeisp. 4 | 168 | 24 | 35 | 92 | + | + | + |
| Vergleichsbeisp. 5 | 170 | 21 | 30 | 92 | ++ | ++ | ++ |
| Vergleichsbeisp. 6 | 170 | 20 | 32 | 90 | + | + | ± |

| | | | | | | | |
|---|---|---|---|---|---|---|---|
| KE | = | Kratzempfindlichkeit | ++ | sehr gut | 2% | der Probepäckchen mangelhaft eingeschlagen |
| vFFS | = | vertikale Formfüll- schliessmaschine | + | gut | 5% | do. |
| | | | + | ausreichend | 10% | do. |
| hFFS | = | horizontale Formfüll- schliessmaschine | − | mangelhaft | 15% | do. |
| | | | −− | unbrauchbar = | 15% | do. |
| * | = | visuelle Beurteilung | | | | |

Die Uberlegenheit der erfindungsgemässen Folie entsprechend Beispiel 1 geht aus der Tabelle deutlich hervor.

Die Vergleichsbeispiele 1 bis 6 zeigen zwar bei einzelnen Punkten jeweils gute Eigenschaften, keine Mehrschichtfolie nach Vergleichsbeispielen 1 bis 6 kann allerdings alle Anforderungen, d.h. grosser Siegelbereich, niedrige minimale Siegelanspringtemperatur, gute optische Eigenschaften, geringe Kratzempfindlichkeit, geringe Reibung sowie eine sehr gute Laufsicherheit auf schnellaufenden Verpackungsmaschinen unterschiedlichen Typs (vFFS-, hFFS- und Einschlagmaschine) gleichzeitig erfüllen.

Als Folie, die allen Anforderungen entspricht, erweist sich aber die erfindungsgemässe siegelbare polyolefinische Mehrschichtfolie aus Beispiel 1.

## Patentansprüche

1. Siegelbare transparente polyolefinische Mehrschichtfolie, bestehend aus einer Basisschicht aus einem Propylenpolymeren und mindestens einer siegelbaren Schicht, welche mindestens ein Propylencopolymeres, mindestens ein niedermolekulares Harz und mindestens ein Polydiorganosiloxan enthält, dadurch gekennzeichnet, dass die Siegelschicht aus einer Kombination von

a) 68,5 bis 89,7 Gew.-%, bezogen auf die siegelbare Schicht, einer Olefinharzzusammensetzung, bestehend aus einem Ethylen-Propylen-Butylen-Terpolymeren und einem Propylen-Butylen-Copolymeren entsprechend einem Gehalt von 0,1 bis 7 Gew.-% Ethylen, 53 bis 89,9 Gew.-% Propen und 10 bis 40 Gew.-% Butylen, bezogen auf die Olefinharzzusammensetzung,

b) 5 bis 15 Gew.-%, bezogen auf die siegelbare Schicht, eines niedrigmolekularen, mit der Olefinharzzusammensetzung verträglichen Harzes,

c) 5 bis 15 Gew.-%, bezogen auf die siegelbare Schicht, eines Propylenhomopolymeren und

d) 0,3 bis 1,5 Gew.-%, bezogen auf die siegelbare Schicht, eines Polydiorganosiloxans, besteht.

2. Mehrschichtfolie nach Anspruch 1, dadurch gekennzeichnet, dass als Komponente b) der siegelbaren Schicht ein niedrigmolekulares Harz aus der Gruppe der Kohlenwasserstoffharze, Ketonharze, Polyamidharze, Kolophoniumharze, Dammarharze, chlorierten aliphatischen und aromatischen Harze enthalten ist.

3. Mehrschichtfolie nach Anspruch 1, dadurch gekennzeichnet, dass als Komponente d) der siegelbaren Schicht ein Polydiorganosiloxan einer kinematischen Viskosität von mindestens 100 $mm^2$/s bei 25 °C enthalten ist.

4. Mehrschichtfolie nach Anspruch 1 bis 3, dadurch gekennzeichnet, dass die Mehrschichtfolie biaxial gereckt worden ist und eine Dicke von 10 bis 50 μm, vorzugsweise von 15 bis 35 μm, besitzt.

5. Mehrschichtfolie nach Anspruch 1 bis 4, dadurch gekennzeichnet, dass die Siegelschichtdicke kleiner als 3 μm, vorzugsweise kleiner als 1 μm, ist.

6. Verwendung der Mehrschichtfolie nach Anspruch 1 bis 5 als Verpackungsfolie auf schnelllaufenden Einschlagmaschinen.

## Revendications

1. Feuille multicouche polyoléfinique scellable, transparente, constituée d'une couche de base d'un polymère du propylène et d'au moins une couche scellable qui contient au moins un copolymère du propylène, au moins une résine de faible masse moléculaire et au moins un polydiorganosiloxane, caractérisée en ce que la couche scellable se compose d'une combinaison de:

a) 68,5 à 89,7% en poids, par rapport à la couche scellable, d'une composition de résine oléfinique constituée d'un terpolymère éthylène-propylène-butylène et d'un copolymère propylène-butylène correspondant à une teneur en éthylène de 0,1 à 7% en poids, en propylène de 53 à 89,9% en poids et en butylène de 10 à 40% en poids par rapport à la composition de résine oléfinique,

b) 5 à 15% en poids, par rapport à la couche scellable, d'une résine de faible masse moléculaire, compatible avec la composition de résine oléfinique,

c) 5 à 15% en poids, par rapport à la couche scellable, d'un homopolymère du propylène, et

d) 0,3 à 1,5% en poids, par rapport à la couche scellable, d'un polydiorganosiloxane.

2. Feuille multicouche suivant la revendication 1, caractérisée en ce que le constituant b) de la couche scellable est une résine de faible masse moléculaire choisie parmi les résines hydrocarbonées, les résines cétoniques, les résines de polyamide, les résines de colophane, les résines dammar, les résines aliphatiques et aromatiques chlorées.

3. Feuille multicouche suivant la revendication 1, caractérisée en ce que le constituant d) de la couche scellable est un polydiorganosiloxane ayant une viscosité cinématique d'au moins 100 mm$^2$/s à 25 °C.

4. Feuille multicouche suivant les revendications 1 à 3, caractérisée en ce que la feuille multicouche a été étirée biaxialement et possède une épaisseur de 10 à 50 micromètres, de préférence de 15 à 35 micromètres.

5. Feuille multicouche suivant les revendications 1 à 4, caractérisée en ce que l'épaisseur de la couche de scellage est inférieure à 3 micromètres, de préférence inférieure à 1 micromètre.

6. Utilisation de la feuille multicouche suivant les revendications 1 à 5 comme feuille d'emballage sur des machines d'enveloppement à grande vitesse.

**Claims**

1. Sealable transparent polyolefinic multilayer film, comprising a base layer comprised of a propylene polymer and at least one sealable layer containing at least one propylene copolymer, at least one low-molecular weight resin and at least one polydiorganosiloxane, wherein the sealing layer comprises a combination of

a) from 68.5 to 89.7% by weight, based on the weight of the sealable layer, of an olefin resin composition, comprising an ethylene-propylene-butylene terpolymer and a propylene-butylene copolymer, corresponding to a content of from about 0.1 to 7% by weight of ethylene, 53 to 89.9% by weight of propylene and 10 to 40% by weight of butylene, based on the weight of the olefin resin composition,

b) from 5 to 15% by weight, based on the weight of the sealable layer, of a low-molecular weight resin, which is compatible with the olefin resin composition,

c) from 5 to 15% by weight, based on the weight of the sealable layer, of a propylene homopolymer, and

d) from 0.3 to 1.5% by weight, based on the weight of the sealable layer, of a polydiorganosiloxane.

2. A multilayer film as claimed in Claim 1, wherein component b) of the sealable layer comprises low-molecular weight resin selected from the group consisting of hydrocarbon resins, ketone resins, polyamide resins, colophonium resins, dammar resins and chlorinated aliphatic and aromatic resins.

3. A multilayer film as claimed in Claim 1, wherein component d) of the sealable layer comprises a polydiorganosiloxane which has a kinematic viscosity of at least 100 mm$^2$/s at 25 °C.

4. A multilayer film as claimed in Claims 1 to 3, wherein the multilayer film has been biaxially stretched and has a thickness from 10 to 50 μm, preferably from 15 to 35 μm.

5. A multilayer film as claimed in Claims 1 to 4, wherein the sealing layer has a thickness of less than 3 μm, preferably of less than 1 μm.

6. Use of the multilayer film as claimed in Claims 1 to 5 as packaging film in high-speed wrapping machines.